# FASCICULE DE BREVET EUROPEEN

(11) **EP 3 392 464 B1**
(45) Date de publication et mention de la délivrance du brevet: **25.03.2020**
(21) Numéro de dépôt: 18167088.6
(22) Date de dépôt: 12.04.2018
(51) Int. Cl.: F01D 11/12, F04D 29/52, F04D 29/68, F01D 5/22

(54) **ÉLÉMENT D'ANNEAU D'ÉTANCHÉITÉ POUR TURBINE COMPORTANT UNE CAVITÉ INCLINÉE DANS UN MATÉRIAU ABRADABLE**
DICHTUNGSRINGELEMENT FÜR TURBINE, DAS EINEN GENEIGTEN HOHLRAUM IN EINEM ABRIEBMATERIAL UMFASST
SEALING RING MEMBER FOR A TURBINE COMPRISING AN ANGLED CAVITY MADE OF AN ABRADABLE MATERIAL

(30) Priorité: 20.04.2017 FR 1753423
(43) Date de publication de la demande: 24.10.2018
(73) Titulaire: SAFRAN AIRCRAFT ENGINES, 75015 Paris (FR)
(72) Inventeur: TELMAN, Cyrille, 92160 Antony (FR); LAMBERT, Olivier Arnaud Fabien, 92330 Sceaux (FR); RICOU, Laurent Pierre Joseph, 77000 Melun (FR)
(74) Mandataire: Brevalex

(56) Documents cités:
- EP-A1- 2 947 276
- FR-A- 1 111 037
- GB-A- 2 017 228
- US-A1- 2016 305 285

## Description

### DOMAINE TECHNIQUE

La présente invention se rapporte au domaine des turbomachines, notamment des moteurs à turbine à gaz, et plus particulièrement au domaine général des éléments d'étanchéité, notamment statoriques, utilisés dans les joints d'étanchéité, notamment à labyrinthe, entre des pièces en rotation les unes par rapport aux autres d'une turbine, notamment entre des pièces mobiles et statoriques d'une turbine.

L'invention s'applique à tout type de turbomachines terrestres ou aéronautiques, et notamment aux turbomachines d'aéronef telles que les turboréacteurs et les turbopropulseurs. Plus préférentiellement, l'invention peut s'appliquer à un turboréacteur double corps et double flux.

### ÉTAT DE LA TECHNIQUE ANTÉRIEURE

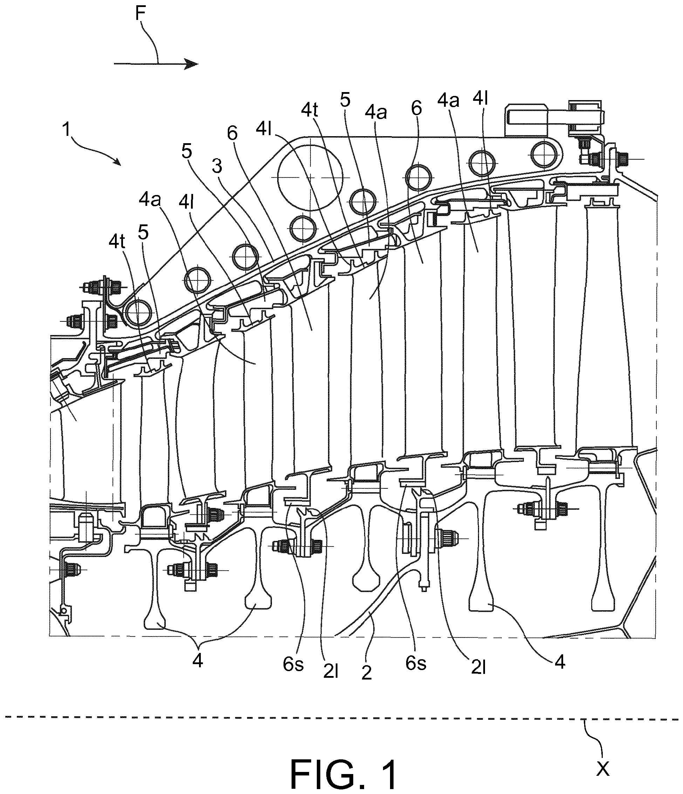

Un moteur à turbine à gaz comprend, au niveau de la turbine par exemple, des joints d'étanchéité entre les extrémités radiales extérieures des aubes mobiles et la surface du stator balayée par les extrémités radiales extérieures de l'étage mobile. Il s'agit d'éviter qu'une partie du gaz moteur ne travaille pas en contournant l'étage de turbine. On utilise dans ce but des joints d'étanchéité à labyrinthe. Ces joints comprennent un élément de joint solidaire du rotor, formé d'une ou plusieurs lames, désignées « léchettes » disposées radialement et transversalement par rapport à l'axe X (voir figure 1) de rotation de la machine. Ils comprennent également un élément de stator complémentaire, en vis-à-vis des lames. Cet élément présente une portion de surface qui coopère avec les lames pour ménager un jeu aussi faible que possible. Plusieurs lames en parallèle induisent une succession de pertes de charge au flux de gaz qui contourne l'étage de turbine, assurant l'étanchéité souhaitée.

On dispose de tels joints d'étanchéité à labyrinthe en plusieurs endroits du moteur, par exemple aussi entre l'arbre de la turbine et la base de l'étage statorique, formé d'ailettes de stator, entre deux étages mobiles successifs d'une turbine.

A titre d'exemple, la figure 1 représente schématiquement en coupe axiale partielle un exemple de turbine 1 basse pression de type connu d'un moteur à turbine à gaz, représentative du contexte technique de l'invention.

Cette turbine 1 est ici à quatre étages. Le rotor 2 de la turbine 1 est formé dans cet exemple de quatre disques de turbine 4 boulonnés entre eux. Chaque disque de turbine 4 porte respectivement sur sa jante les aubes mobiles 4a. En extrémité radiale extérieure, les aubes mobiles 4a sont pourvues d'un talon 4t sur lequel sont ménagées des lames radiales 4l respectivement, tournées vers le stator 3. Sur l'exemple de la figure 1, chaque talon 4t support deux lames radiales 4l formant les léchettes de joints d'étanchéité à labyrinthe. En vis-à-vis des léchettes, le stator comprend des éléments d'étanchéité 5 qui, comme cela est connu en soi, forment avec les léchettes sur les talons 4t des joints d'étanchéité à labyrinthe. Les joints d'étanchéité à labyrinthe sont dans cet exemple à des rayons différents par rapport à l'axe X de la machine.

On trouve également des joints d'étanchéité à labyrinthe sur l'extrémité radiale intérieure des roues d'aubes de stator inter-étages 6. L'élément de joint statorique 6s est un anneau en deux moitiés, par exemple. Les léchettes 2l sont portées par les extensions latérales des disques de turbine 4 reliant ces derniers par boulonnage.

Les moteurs à turbine à gaz en fonction de leurs conditions de fonctionnement subissent des variations de dilatation différentielle entre notamment les éléments de stator et ceux de rotor. Ces différences de variation, si elles ne sont pas maîtrisées, peuvent affecter les jeux entre les parties mobiles et fixes. C'est ainsi que pour un moteur de propulsion d'un aéronef subissant en vol une extinction de flamme dans la chambre de combustion pour une quelconque raison, l'ensemble de la turbine, n'étant plus traversé par des gaz à haute température, se refroidit. Cependant, le carter peut être amené à se refroidir plus rapidement que le rotor de turbine, avec un impact sur les jeux. Or, pour avoir un rendement optimal, les jeux des joints d'étanchéité à labyrinthe sont calculés pour, en fonctionnement, être aussi faibles que possible. Il s'ensuit un risque de blocage du rotor (« rotor lock » en anglais) en raison du contact plus ou moins serré des léchettes avec le matériau abradable de l'élément de stator, dans une telle situation. Il est à noter que le matériau abradable est un matériau qui est usé ou déformé au contact de la léchette en rotation, préférentiellement à cette dernière. Il peut s'agir tout particulièrement d'un matériau en nid d'abeilles.

Les caractéristiques du joint d'étanchéité à labyrinthe sont déterminées et ajustées pour permettre une variation de jeu et un éventuel faible contact pendant les différentes phases de vol, en fonctionnement normal, mais lorsque les variations dimensionnelles sont importantes résultant d'un incident de cet ordre, le joint d'étanchéité à labyrinthe ne peut plus remplir son rôle. Le rotor étant empêché de tourner, le redémarrage du moteur par autorotation du corps basse pression (BP) ou haute pression (HP), ou bien par entraînement par un moteur auxiliaire, peut ne pas se produire de façon satisfaisante.

Pour éviter le serrage du rotor en cas d'une telle extinction de la chambre de combustion, il serait envisageable d'augmenter le jeu entre les léchettes et le matériau abradable. Cependant, cette solution n'est pas viable économiquement en raison de la chute de performance du moteur qu'elle induirait.

Des solutions ont donc déjà été envisagées pour permettre de faire face à la situation d'une extinction intempestive de la chambre de combustion sans réduire les performances du moteur en fonctionnement normal.

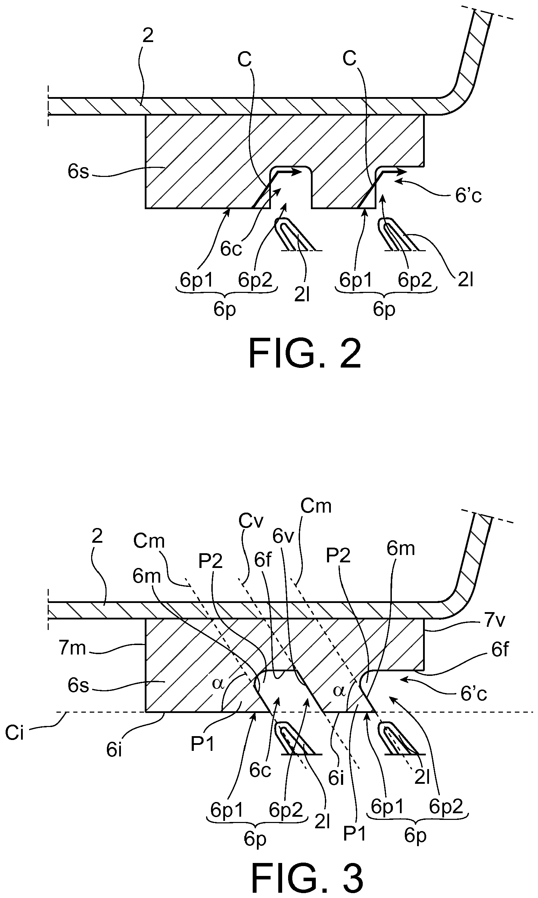

Ainsi, en référence à la figure 2, on a représenté un exemple de réalisation d'un élément d'étanchéité statorique 6s d'un joint d'étanchéité à labyrinthe mettant en œuvre un exemple de telles solutions.

Dans cet exemple, l'étanchéité est réalisée au niveau de l'extrémité radiale intérieure du disque de stator inter-étage. L'élément d'étanchéité statorique 6s est un secteur d'anneau. Il comporte deux portions de surface 6p agencées pour coopérer chacune avec une léchette 2l du talon 4t de l'aube de l'étage considéré. De plus, chaque portion de surface 6p comprend une première zone 6p1 et une deuxième zone 6p2. La première zone 6p1 est à l'amont de la deuxième zone 6p2 et coopère avec une léchette 2l du talon 4t. Cette première zone 6p1 correspond à la position axiale de la léchette 2l en fonctionnement normal de la machine. Le jeu entre la léchette 2l et le matériau abradable de l'élément d'étanchéité 6s est maîtrisé. En fonctionnement normal du moteur à turbine à gaz, en dehors d'une phase d'auto-rotation (ou « windmilling » en anglais), le joint d'étanchéité à labyrinthe ne subit pas de détérioration sensible, les écarts de température sont maîtrisés, et les écarts de dilatation entre les parties mobiles et les parties de stator n'affectent pas la surface du matériau abradable. Les léchettes 2l viennent alors au niveau de la première zone 6p1 du matériau abradable.

Dans la deuxième zone 6p2, située en aval de la première zone 6p1, l'épaisseur de la couche du matériau abradable est réduite. Une cavité annulaire 6c, ou encoche, est en effet usinée dans le matériau pour l'affaiblir. Cette cavité annulaire 6c est située à la périphérie interne de l'élément d'étanchéité 6s et débouche radialement vers l'intérieur. Cette deuxième zone 6p2 correspond à la position axiale de la léchette 2l au cours d'un fonctionnement extrême du moteur, comme le positionnement des léchettes 2l représenté sur la figure 2, où la chambre de combustion est éteinte en vol. Le rotor est alors susceptible d'être serré par l'élément statorique. En effet, lorsque la chambre de combustion s'éteint pour une raison non souhaitée, les rotors ne sont plus parcourus par des gaz moteurs et ils subissent la pression de l'air entrant dans le moteur. Dans cette situation, les rotors subissent un déplacement axial vers l'aval. Du refroidissement différentiel entre le rotor et le stator, il s'ensuit que, si le stator vient à se refroidir rapidement et se rétracter, les extrémités des léchettes pénètrent dans le matériau abradable dont la résistance à la pénétration est donc réduite à cause des cavités 6c. Alors, le risque de blocage du rotor peut être diminué.

Toutefois, cette solution ne permet pas nécessairement d'éviter le risque de blocage du rotor. En effet, lors d'un ré-allumage, faisant suite à une phase d'autorotation, les léchettes 2l vont se déplacer, depuis leur position axiale au niveau de la première zone 6p1, vers l'aval pour arriver au niveau de la deuxième zone 6p2 et des cavités 6c. Néanmoins, lors de ce cheminement C, symbolisé par les flèches C sur la figure 2, emprunté par les léchettes 2l, celles-ci traversent une partie du matériau abradable 6c située dans la première zone 6p1. En traversant cette partie de matériau abradable, un phénomène de blocage du rotor peut apparaître.

Il pourrait alors être possible d'envisager de biseauter directement cette partie de matériau abradable par laquelle passent les léchettes 2l lors de leur cheminement C depuis la première zone 6p1 vers la deuxième zone 6p2. Toutefois, une telle solution aurait un impact négatif sur la performance du moteur lors de son fonctionnement normal de sorte qu'elle ne paraît pas envisageable.

EP 2 947 276 A1 divulgue un élément d'étanchéité extérieur de type BOAS coopérant avec une aube de turbine. US 2016/0305285 A1 décrit la coopération entre une structure poreuse et une aube de turbine. GB 2 017 228 A enseigne un anneau de stator placé autour d'aubes de turbine, cet anneau comportant des nervures orientées obliquement. FR 1 111037 A se rapporte à un perfectionnement aux machines à fluide à écoulement axial.

### EXPOSÉ DE L'INVENTION

L'invention a donc pour but de remédier au moins partiellement aux besoins mentionnés ci-dessus et aux inconvénients relatifs aux réalisations de l'art antérieur.

En particulier, l'invention vise à proposer une solution alternative à celles de l'art antérieur pour diminuer, voire éviter, le risque de blocage du rotor suite à une extinction intempestive de la chambre de combustion sans pour autant réduire les performances du moteur en fonctionnement normal.

L'invention a ainsi pour objet, selon l'un de ses aspects, un joint d'étanchéité pour une turbomachine selon la revendication 1.

Avantageusement, l'élément d'anneau d'étanchéité est agencé pour former un joint d'étanchéité à labyrinthe en association avec au moins une léchette annulaire autour de l'axe du joint d'étanchéité à labyrinthe.

De façon avantageuse, la cavité annulaire définit une paroi latérale amont et une paroi latérale aval qui sont sensiblement radiales et qui sont au moins partiellement mutuellement en regard l'une de l'autre.

Préférentiellement encore, la paroi latérale amont et/ou la paroi latérale aval s'étendent respectivement, par observation en section axiale, selon un axe de cavité amont et/ou selon un axe de cavité aval non perpendiculaires à l'axe de la turbomachine.

Le joint d'étanchéité selon l'invention peut en outre comporter l'une ou plusieurs des caractéristiques suivantes prises isolément ou suivant toutes combinaisons techniques possibles.

L'élément d'anneau d'étanchéité peut être un secteur d'anneau d'étanchéité ou bien un anneau complet.

De façon avantageuse, le rayon d'une première zone d'une portion d'étanchéité est constant pour toutes les premières zones de plusieurs portions de surface d'étanchéité. Autrement dit encore, le matériau abradable n'est pas de type étagé, c'est-à-dire avec une surface intérieure présentant, en section axiale, une forme d'escalier avec une alternance de marches et de contremarches.

De façon avantageuse encore, la paroi latérale amont et/ou la paroi latérale aval de ladite au moins une cavité annulaire définissent annulairement une portion de surface de forme tronconique.

Le matériau abradable peut comporter une paroi latérale amont et une paroi latérale aval s'étendant respectivement, par observation en section axiale, selon un axe de matériau abradable amont Dm et un axe de matériau abradable aval Dv parallèles à l'axe de cavité amont et/ou l'axe de cavité aval.

Le matériau abradable peut tout particulièrement être un matériau de type nid d'abeilles, les alvéoles du nid d'abeilles étant orientées selon l'axe de cavité amont et/ou l'axe de cavité aval.

Ladite cavité annulaire peut être formée, notamment par usinage, sur toute la circonférence du matériau abradable autour de l'axe de la turbomachine.

De plus, ladite cavité annulaire peut être formée, notamment par usinage, à la périphérie interne du matériau abradable et débouche radialement vers l'intérieur.

En outre, ladite cavité annulaire peut comporter une paroi de fond s'étendant, par observation en section axiale, parallèlement à l'axe de la turbomachine.

L'élément d'anneau d'étanchéité peut préférentiellement être un élément d'anneau d'étanchéité statorique.

Ainsi, l'élément d'anneau d'étanchéité statorique peut par exemple être agencé pour former un joint d'étanchéité en extrémité radiale des aubes mobiles d'une turbine. L'élément d'anneau d'étanchéité statorique peut encore être agencé pour former un joint d'étanchéité en extrémité radiale intérieure des aubes statoriques d'une turbine.

En outre, l'invention a également pour objet, selon un autre de ses aspects, une turbine de moteur à turbine à gaz, caractérisée en ce qu'elle comporte un joint d'étanchéité tel que défini précédemment, ladite première zone de ladite au moins une portion d'étanchéité correspondant au fonctionnement nominal de la turbine et ladite seconde zone de ladite au moins une portion d'étanchéité correspondant au fonctionnement en phase de ré-allumage après une extinction de chambre de combustion.

De plus, l'invention a encore pour objet, selon un autre de ses aspects, une turbomachine, notamment un moteur à turbine à gaz, caractérisée en ce qu'elle comporte une turbine ou un joint d'étanchéité tels que définis précédemment.

L'invention trouve notamment une application où l'élément est agencé pour former un joint d'étanchéité à labyrinthe en extrémité radiale intérieure des aubes statoriques d'une turbine.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
- la figure 1 représente, en coupe axiale partielle, un exemple de turbine basse pression d'un moteur à turbine à gaz représentative du contexte technique de l'invention,
- la figure 2 représente, de façon très schématique en coupe partielle, un exemple connu de réalisation d'un élément d'étanchéité statorique d'un joint d'étanchéité à labyrinthe,
- les figures 3 et 4 représentent, de façon très schématique en coupe partielle, deux exemples de réalisation d'éléments d'étanchéité statoriques d'un joint d'étanchéité à labyrinthe conformes à l'invention,
- la figure 5 est une vue semblable à celle de la figure 4 et permet d'illustrer le principe de fonctionnement d'un élément d'étanchéité selon l'invention, et
- la figure 6 est une vue semblable à celle de la figure 4 et permet d'illustrer la configuration de la cavité d'un élément d'étanchéité selon l'invention vis-à-vis de celle d'une léchette correspondante.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Dans toute la description, il est noté que les termes amont et aval sont à considérer par rapport à une direction principale F, représentée sur la figure 1, d'écoulement normal des gaz (de l'amont vers l'aval) pour une turbomachine. Par ailleurs, on appelle axe X du joint d'étanchéité ou de la turbomachine, l'axe de symétrie radiale du joint d'étanchéité ou de la turbomachine. La direction axiale du joint d'étanchéité correspond à la direction de l'axe X du joint d'étanchéité. Une direction radiale du joint d'étanchéité est une direction perpendiculaire à l'axe X du joint d'étanchéité. En outre, sauf précision contraire, les adjectifs et adverbes axial, radial, axialement et radialement sont utilisés en référence aux directions axiale et radiale précitées. De plus, sauf précision contraire, les termes intérieur et extérieur sont utilisés en référence à une direction radiale de sorte que la partie intérieure d'un élément est plus proche de l'axe X du joint d'étanchéité que la partie extérieure du même élément.

Les figures 1 et 2 ont été décrites précédemment dans la partie relative à l'état de la technique antérieur et au contexte technique de l'invention.

En référence aux figures 3 à 6, on va maintenant décrire des exemples de réalisation d'élément d'anneau d'étanchéité 6s de joint d'étanchéité à labyrinthe conformes à l'invention. Dans ces exemples, l'élément d'anneau d'étanchéité 6s est de type statorique. Il forme un joint d'étanchéité à labyrinthe en association avec deux léchettes 2l annulaires autour de l'axe X du joint d'étanchéité à labyrinthe. Toutefois, ces choix ne sont aucunement limitatifs.

Comme visible sur ces figures 3 à 6, l'élément d'anneau d'étanchéité 6s comporte un matériau abradable avec deux portions de surface d'étanchéité 6p, chacune étant apte à coopérer avec une léchette 2l correspondante.

Chaque portion d'étanchéité 6p comporte axialement une première zone 6p1 avec une première résistance à la pénétration de la léchette 2l et une deuxième zone 6p2, adjacente à la première zone 6p1 et située en aval de celle-ci, avec une résistance à la pénétration de la léchette 2l qui est réduite par rapport à la première zone 6p1.

Autrement dit, la deuxième zone 6p2 rend par sa configuration la première zone 6p1 plus résistante à une pénétration d'une léchette dans la direction radiale.

De plus, comme on peut le voir sur ces figures 3 à 6, la surface intérieure 6i des premières zones 6p1 est à une même distance radiale de l'axe X du joint d'étanchéité à labyrinthe pour les deux portions de surface d'étanchéité 6p. Autrement dit, le matériau abradable n'est avantageusement pas du type « étagé ».

Par ailleurs, conformément à l'invention, chaque deuxième zone 6p2 comporte une cavité annulaire 6c, formée dans le matériau abradable, notamment par usinage.

La première cavité amont 6c comporte une paroi latérale amont 6m et une paroi latérale aval 6v s'étendant respectivement, par observation en section axiale, selon un axe de cavité amont Cm et selon un axe de cavité aval Cv. Ces parois latérales amont 6m et aval 6v sont réunies par une paroi de fond 6f de cette première cavité amont 6c.

La deuxième cavité aval 6'c comporte uniquement une paroi latérale amont 6m s'étendant selon un axe de cavité amont Cm, reliée à une paroi de fond 6f.

Autrement dit, la première cavité amont 6c débouche sur la périphérie intérieure du matériau abradable, et la deuxième cavité aval 6'c débouche également sur la périphérie intérieure du matériau abradable et également sur sa paroi latérale aval 7v.

Avantageusement, les axes de cavité amont Cm et aval Cv ne sont pas perpendiculaires à l'axe X du joint d'étanchéité à labyrinthe. En particulier, ils sont ici parallèles entre eux et forment un angle α avec l'axe Ci selon lequel s'étend la surface intérieure 6i des premières zones 6p1 qui est strictement compris entre 0 et 90°, étant par exemple compris entre 30 et 60°. De cette façon, une portion P1 du matériau abradable des premières zones 6p1 est superposée radialement à une portion P2 des cavités 6c, 6'c des deuxièmes zones 6p2.

De plus, les axes selon lesquels s'étendent les parois de fond 6f des cavités 6c, 6'c sont avantageusement parallèles à l'axe X du joint d'étanchéité à labyrinthe.

Ainsi, afin de résoudre la problématique de blocage du rotor tout en préservant la performance moteur en fonctionnement, l'invention met en œuvre une solution de cavité ou encoche inclinée ou encore biseautée.

Dans l'exemple de la figure 3, les parois latérales amont 7m et aval 7v du matériau abradable sont perpendiculaires à l'axe X du joint d'étanchéité à labyrinthe.

Or, le matériau abradable étant avantageusement de type nid d'abeilles, la réalisation des alvéoles du nid d'abeilles de façon inclinée est préférable pour obtenir une résistance optimale du matériau abradable. Alors, il s'avère également préférable de réaliser les parois latérales 7m et 7v du matériau abradable de façon inclinée.

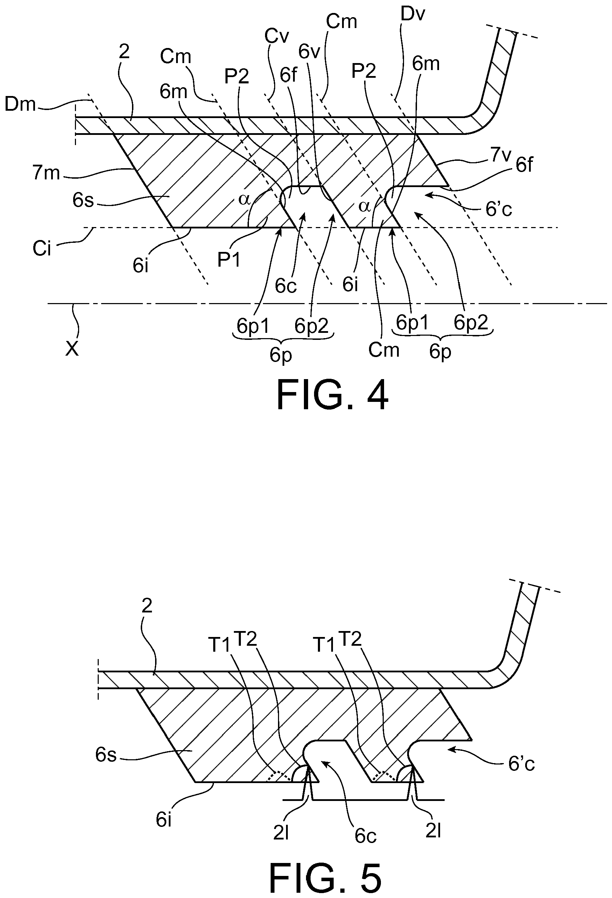

Ainsi, la figure 4 représente la configuration de l'élément d'anneau d'étanchéité 6s dans laquelle les parois latérales amont 7m et aval 7v du matériau abradable présentent la même inclinaison, par rapport à l'axe X du joint d'étanchéité à labyrinthe, que celle des cavités 6c et que celle des alvéoles du nid d'abeilles. Le choix d'avoir des mailles selon cette pente pour le nid d'abeilles permet de faciliter l'usinage des cavités 6c. De plus, le fait de choisir une pente des mailles inclinées qui soit similaire à celle des cavités 6c permet de ne pas perdre de performance, par exemple via des fuites d'air au travers des alvéoles, contrairement à des solutions qui n'envisageraient que la réalisation de trous dans le matériau abradable. Il n'y a pas de perte de performance si l'angle d'inclinaison du nid d'abeilles est au maximum égal à l'angle a. Si l'angle d'inclinaison du nid d'abeilles est plus faible que l'angle a, il n'y a pas d'impact sur la performance.

La figure 5 permet d'illustrer le principe de fonctionnement de l'invention. En effet, grâce à l'invention, il est possible, en fonctionnement normal, de conserver la performance du moteur car les léchettes 2l seront en vis-à-vis du matériau abradable non usiné, autrement dit une portion du matériau abradable dépourvue de la présence d'une cavité annulaire 6c, et donc avec une résistance optimale au passage de l'air, ce qui correspond au tracé T1 en traits pointillés sur la figure 5.

Par contre, lors d'un ré-allumage, la léchette 2l va traverser seulement la pointe du matériau abradable, comme représenté par le tracé T2 en trait plein sur la figure 5, et venir la casser sans provoquer de phénomène de blocage du rotor. Lors du retour en fonctionnement normal, la perte de performance sera alors seulement l'ouverture due à la perte du pic de matériau abradable cassé.

Il est par ailleurs à noter que l'invention permet de créer facilement deux cavités ou plus sur le matériau abradable, notamment par usinage, au même diamètre, sans avoir besoin de recourir à une solution de type abradable étagé.

De plus, la réalisation des cavités 6c est faite sur 360° dans le matériau abradable.

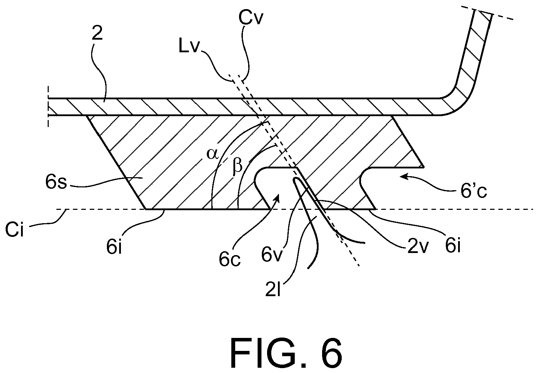

De manière avantageuse, la pente de l'usinage d'une cavité annulaire 6c doit être suffisante pour permettre la rupture du matériau abradable lors d'un ré-allumage et pour laisser aller la léchette 2l dans la cavité annulaire 6c sans la bloquer. Ainsi, le nombre de cavités 6c correspond avantageusement au nombre de léchettes 2l en vis-à-vis. Plus précisément encore, la pente à l'aval de la cavité annulaire 6c doit être au moins égale à la pente de la léchette 2l pour permettre à celle-ci d'aller en fond de cavité comme représenté sur la figure 6. Autrement dit, par observation en section axiale, l'angle α formé entre l'axe de cavité aval Cv et l'axe Ci selon lequel s'étend la surface intérieure 6i de la première zone 6p1 associée à la cavité annulaire 6c est supérieur ou égal à l'angle β formé entre l'axe Lv selon lequel s'étend la paroi latérale aval 2v de la léchette 2l et l'axe Ci, de sorte que la léchette 2l puisse pénétrer dans la cavité annulaire 6c.

Par ailleurs, la profondeur des cavités annulaires 6c, autrement dit la distance entre l'axe Ci et les parois de fond 6f tels que représentés par exemple sur les figures 3 et 4, peut notamment être déterminée par l'usure prédite lors d'un redémarrage en phase d'auto-rotation.

En conséquence, la solution proposée par l'invention permet d'avoir une opérabilité retrouvée en mode de ré-allumage tout en évitant le risque de blocage du rotor, et permet également de ne pas dégrader les performances en fonctionnement nominal.

Bien entendu, l'invention n'est pas limitée aux exemples de réalisation qui viennent d'être décrits. Diverses modifications peuvent y être apportées par l'homme du métier.

## Revendications

1. Joint d'étanchéité pour une turbomachine, servant à assurer l'étanchéité entre deux éléments de la turbomachine en rotation l'un par rapport à l'autre et étant de révolution autour de l'axe (X) du joint d'étanchéité, comportant :
- au moins un élément d'anneau d'étanchéité (6s) de turbomachine agencé autour d'un axe de turbomachine (X), étant annulaire autour de l'axe (X) du joint d'étanchéité et destiné à être porté par l'un des deux éléments de la turbomachine en rotation l'un par rapport à l'autre, l'élément d'anneau d'étanchéité (6s) étant en un matériau abradable et comportant au moins une portion d'étanchéité (6p) apte à coopérer avec au moins une léchette d'étanchéité (2l), ladite au moins une portion d'étanchéité (6p) comportant une première zone (6p1) et une deuxième zone (6p2) adjacente à la première zone (6p1) dans la direction de l'axe (X) de la turbomachine, la surface intérieure (6i) d'une première zone (6p1) étant à une même distance radiale de l'axe (X) de turbomachine pour toute portion de surface d'étanchéité (6p), la portion d'étanchéité (6p) comportant une cavité annulaire (6c) qui débouche dans une surface intérieure de la deuxième zone (6p2) et s'étend dans la première zone (6p1),
- au moins une léchette (2l), annulaire autour de l'axe (X) du joint d'étanchéité, destinée à être portée par l'autre des deux éléments de la turbomachine en rotation l'un par rapport à l'autre, ladite au moins une léchette (2l) comportant une paroi latérale aval (2v), destinée à venir en vis-à-vis d'une paroi latérale aval (6v) de ladite cavité annulaire (6c), et, par observation en section axiale, l'angle (a) formé entre l'axe de cavité aval (Cv) et l'axe (Ci) selon lequel s'étend la surface intérieure (6i) de la première zone (6p1) associée à ladite cavité annulaire (6c) étant supérieur ou égal à l'angle (β) formé entre l'axe (Lv) selon lequel s'étend la paroi latérale aval (2v) de ladite au moins une léchette (2l) et l'axe (Ci) selon lequel s'étend la surface intérieure (6i) de la première zone (6p1) associée à ladite cavité annulaire (6c), de sorte que ladite au moins une léchette (2l) puisse pénétrer dans ladite cavité annulaire (6c),
**caractérisé en ce que** la cavité annulaire (6c) définit une paroi latérale amont (6m) et/ou une paroi latérale aval (6v) formant un angle (a) avec la surface intérieure (6i) de la première zone (6p1) strictement compris entre 0 et 90°, de sorte qu'une portion (P1) du matériau abradable de la première zone (6p1) soit superposée radialement à une portion (P2) de la cavité annulaire (6c).

2. Joint d'étanchéité selon la revendication 1, **caractérisé en ce que** la paroi latérale amont (6m) et/ou la paroi latérale aval (6v) s'étendent respectivement, par observation en section axiale, selon un axe de cavité amont (Cm) et/ou selon un axe de cavité aval (Cv) non perpendiculaires à l'axe (X) de turbomachine, et **en ce que** le matériau abradable comporte une paroi latérale amont (7m) et une paroi latérale aval (7v) s'étendant respectivement, par observation en section axiale, selon un axe de matériau abradable amont (Dm) et un axe de matériau abradable aval (Dv) parallèles à l'axe de cavité amont (Cm) et/ou l'axe de cavité aval (Cv).

3. Joint d'étanchéité selon la revendication 2, **caractérisé en ce que** le matériau abradable est un matériau de type nid d'abeilles, les alvéoles du nid d'abeilles étant orientées selon l'axe de cavité amont (Cm) et/ou l'axe de cavité aval (Cv).

4. Joint d'étanchéité selon l'une des revendications précédentes, **caractérisé en ce que** ladite cavité annulaire (6c) est formée sur toute la circonférence du matériau abradable autour de l'axe (X) de turbomachine.

5. Joint d'étanchéité selon l'une quelconque des revendications précédentes, **caractérisé en ce que** ladite cavité annulaire (6c) est formée à la périphérie interne du matériau abradable et débouche radialement vers l'intérieur.

6. Joint d'étanchéité selon l'une quelconque des revendications précédentes, **caractérisé en ce que** ladite cavité annulaire (6c) comporte une paroi de fond (6f) s'étendant, par observation en section axiale, parallèlement à l'axe (X) de turbomachine.

7. Turbine (1) de moteur à turbine à gaz, **caractérisée en ce qu'**elle comporte un joint d'étanchéité selon l'une quelconque des revendications 1 à 6, ladite première zone (6p1) de ladite au moins une portion d'étanchéité (6p) correspondant au fonctionnement nominal de la turbine et ladite seconde zone (6p2) de ladite au moins une portion d'étanchéité (6p) correspondant au fonctionnement en phase de ré-allumage après une extinction de chambre de combustion.

8. Turbomachine **caractérisée en ce qu'**elle comporte une turbine (1) selon la revendication 7 ou un joint d'étanchéité selon l'une quelconque des revendications 1 à 6.

## Patentansprüche

1. Dichtung für eine Turbomaschine zur Gewährleistung der Dichtigkeit zwischen zwei Elementen der Turbomaschine, die sich bezüglich zueinander drehen und um die Achse (X) der Dichtung umlaufen, mit:
- mindestens einem Dichtungsringelement (6s) der Turbomaschine, das um eine Achse der Turbomaschine (X) herum angeordnet ist, ringförmig um die Achse (X) der Dichtung verläuft und dazu vorgesehen ist, von einem der beiden sich bezüglich zueinander drehenden Elemente der Turbomaschine getragen zu werden, wobei das Dichtungsringelement (6s) aus einem Abriebmaterial besteht und mindestens einen Dichtungsabschnitt (6p) aufweist, der mit mindestens einer Dichtungszunge (21) zusammenwirken kann, wobei dieser mindestens eine Dichtungsabschnitt (6p) einen ersten Bereich (6p1) und einen zweiten Bereich (6p2) angrenzend an den ersten Bereich (6p1) in Richtung der Achse (X) der Turbomaschine aufweist, wobei sich die Innenfläche (6i) des ersten Bereichs (6p1) über den gesamten Abschnitt der Dichtfläche (6p) in einem gleichen radialen Abstand zur Achse (X) der Turbomaschine befindet, wobei der Dichtungsabschnitt (6p) einen ringförmigen Hohlraum (6c) aufweist, der sich in eine Innenfläche des zweiten Bereichs (6p2) öffnet und sich in den ersten Bereich (6p1) erstreckt,
- mindestens einer Zunge (21), die ringförmig um die Achse (X) der Dichtung verläuft, die dazu vorgesehen ist, von dem anderen der beiden bezüglich zueinander drehenden Elemente der Turbomaschine getragen zu werden, wobei die mindestens eine Zunge (21) eine nachgelagerte Seitenwand (2v) aufweist, die gegenüber einer nachgelagerten Seitenwand (6v) des ringförmigen Hohlraums (6c) zu liegen kommen soll, und wobei, bei Betrachtung in einem axialen Schnitt, der Winkel (a) zwischen der Achse des nachgelagerten Hohlraums (Cv) und der Achse (Ci), entlang welcher sich die dem ringförmigen Hohlraum (6c) zugeordnete Innenfläche (6i) des ersten Bereichs (6p1) erstreckt, größer oder gleich dem Winkel (β) zwischen der Achse (Lv), entlang welcher sich die nachgelagerte Seitenwand (2v) der mindestens einen Zunge (21) erstreckt, und der Achse (Ci), entlang welcher sich die dem ringförmigen Hohlraum (6c) zugeordnete Innenfläche (6i) des ersten Bereichs (6p1) erstreckt, derart ist, dass die mindestens eine Zunge (21) in den ringförmigen Hohlraum (6c) eindringen kann,
**dadurch gekennzeichnet, dass** der ringförmige Hohlraum (6c) eine vorgelagerte Seitenwand (6m) und/oder eine nachgelagerte Seitenwand (6v) definiert, die einen Winkel (a) mit der Innenfläche (6i) des ersten Bereichs (6p1) genau zwischen 0 und 90° bildet, derart, dass ein Abschnitt (P1) des Abriebmaterials des ersten Bereichs (6p1) einen Abschnitt (P2) des ringförmigen Hohlraums (6c) radial überlagert.

2. Dichtung nach Anspruch 1, **dadurch gekennzeichnet, dass** die vorgelagerte Seitenwand (6m) und/oder die nachgelagerte Seitenwand (6v), bei Betrachtung in einem axialen Schnitt, jeweils entlang einer Achse des vorgelagerten Hohlraums (Cm) und/oder entlang einer Achse des nachgelagerten Hohlraums (Cv) verlaufen, welche nicht senkrecht zur Achse (X) der Turbomaschine stehen, und dass das Abriebmaterial eine vorgelagerte Seitenwand (7m) und eine nachgelagerte Seitenwand (7v) umfasst, welche, bei Betrachtung in einem axialen Schnitt, jeweils entlang einer Achse des vorgelagerten Abriebmaterials (Dm) und einer Achse des nachgelagerten Abriebmaterials (Dv) verlaufen, welche parallel zur Achse des vorgelagerten Hohlraums (Cm) und/oder zur Achse des nachgelagerten Hohlraums (Cv) sind.

3. Dichtung nach Anspruch 2, **dadurch gekennzeichnet, dass** das Abriebmaterial ein waffelmusterartiges Material ist, wobei die Zellen des Waffelmusters entlang der Achse des vorgelagerten Hohlraums (Cm) und/oder der Achse des nachgelagerten Hohlraums (Cv) ausgerichtet sind.

4. Dichtung nach einem der vorhergehenden Ansprüche, **dadurch gekennzeichnet, dass** der ringförmige Hohlraum (6c) auf dem gesamten Umfang des Abriebmaterials um die Achse (X) der Turbomaschine herum ausgebildet ist.

5. Dichtung nach einem der vorhergehenden Ansprüche, **dadurch gekennzeichnet, dass** der ringförmige Hohlraum (6c) an dem inneren Umfang des Abriebmaterials ausgebildet ist und sich radial nach innen öffnet.

6. Dichtung nach einem der vorhergehenden Ansprüche, **dadurch gekennzeichnet, dass** der ringförmige Hohlraum (6c) eine Bodenwand (6f) aufweist, die sich, bei Betrachtung in einem axialen Schnitt, parallel zur Achse (X) der Turbomaschine erstreckt.

7. Turbine (1) eines Gasturbinenmotors, **dadurch gekennzeichnet, dass** diese eine Dichtung nach einem der Ansprüche 1 bis 6 aufweist, wobei der erste Bereich (6p1) des mindestens einen Dichtungsabschnittes (6p) dem Nennbetrieb der Turbine entspricht und der zweite Bereich (6p2) des mindestens einen Dichtungsabschnittes (6p) dem Betrieb in der Wiederzündungsphase nach einer Brennkammerabschaltung entspricht.

8. Turbomaschine, **dadurch gekennzeichnet, dass** diese eine Turbine (1) nach Anspruch 7 oder eine Dichtung nach einem der Ansprüche 1 bis 6 aufweist.

## Claims

1. Seal for a turbomachine, used to provide the seal between two elements of the turbomachine in rotation with respect to one another and being of revolution about the axis (X) of the seal, comprising:
- at least one sealing ring element (6s) of a turbomachine arranged about a turbomachine axis (X), being annular about the axis (X) of the seal and intended to be supported by one of the two elements of the turbomachine in rotation with respect to one another, the sealing ring element (6s) being made from an abradable material and comprising at least one sealing portion (6p) able to engage with at least one sealing wiper (21), said at least one sealing portion (6p) comprising a first area (6p1) and a second area (6p2) adjacent to the first area (6p1) in the direction of the axis (X) of the turbomachine, with the inner surface (6i) of a first area (6p1) being at the same radial distance from the axis (X) of a turbomachine for any sealing surface portion (6p), with the sealing portion (6p) comprising an annular cavity (6c) which opens into an inner surface of the second area (6p2) and extends into the first area (6p1).
- at least one wiper (21), annular about the axis (X) of the seal, intended to be supported by the other of the two elements of the turbomachine in rotation with respect to one another, said at least one wiper (21) comprising a downstream lateral wall (2v), intended to come opposite a downstream lateral wall (6v) of said annular cavity (6c), and, through observation as an axial section, the angle (α) formed between the downstream axis of the cavity (Cv) and the axis (Ci) along which extends the inner surface (6i) of the first area (6p1) associated with said annular cavity (6c) being greater than or equal to the angle (β) formed between the axis (Lv) along which extends the downstream lateral wall (2v) of said at least one wiper (21) and the axis (Ci) along which extends the inner surface (6i) of the first area (6p1) associated with said annular cavity (6c), in such a way that said at least one wiper (21) can penetrate into said annular cavity (6c),
**characterised in that** the annular cavity (6c) defines an upstream lateral wall (6m) and/or a downstream lateral wall (6v) forming an angle (α) with the inner surface (6i) of the first area (6p1) strictly between 0 and 90°, in such a way that a portion (P) of the abradable material of the first area (6p1) is radially superimposed on a portion (P2) of the annular cavity (6c).

2. Seal according to claim 1, **characterised in that** the upstream lateral wall (6m) and/or the downstream lateral wall (6v) extend respectively, through observation as an axial section, along an upstream axis of the cavity (Cm) and/or along a downstream axis of the cavity (Cv) that are not perpendicular to the axis (X) of the turbomachine, and **in that** the abradable material comprises an upstream lateral wall (7m) and a downstream lateral wall (7v) extending respectively, through observation as an axial section, along an upstream axis of the abradable material (Dm) and a downstream axis of the abradable material (Dv) parallel to the upstream axis of the cavity (Cm) and/or the downstream axis of the cavity (Cv).

3. Seal according to claim 2, **characterised in that** the abradable material is a material of the honeycomb type, with the cells of the honeycomb being oriented along the upstream axis of the cavity (Cm) and/or the downstream axis of the cavity (Cv).

4. Seal according to one of the preceding claims, **characterised in that** said annular cavity (6c) is formed, over the entire circumference of the abradable material about the axis (X) of the turbomachine.

5. Seal as claimed in any preceding claim, **characterised in that** said annular cavity (6c) is formed, at the internal periphery of the abradable material and opens radially inwards.

6. Seal as claimed in any preceding claim, **characterised in that** said annular cavity (6c) comprises a bottom wall (6f) extending, through observation as an axial section, parallel to the axis (X) of the turbomachine.

7. Turbine (1) of a gas turbine engine, **characterised in that** it comprises a seal according to any of claims 1 to 6, said first area (6p1) of said at least one sealing portion (6p) corresponding to the nominal operation of the turbine and said second area (6p2) of said at least one sealing portion (6p) corresponding to the operation in the reignition phase after an extinction of the combustion chamber.

8. Turbomachine **characterised in that** it comprises a turbine (1) according to claim 7 or a seal according to any of claims 1 to 6.
